# EUROPEAN PATENT SPECIFICATION

(11) **EP 0 920 022 B1**
(45) Date of publication and mention of the grant of the patent: **13.11.2002**
(21) Application number: 98500074.4
(22) Date of filing: 24.03.1998
(51) Int. Cl.: G11B 33/04

(54) **Case for compact discs and similar objects**
Aufbewahrungskassette für CD-Platten und dergleiche Objekte
Boîtier de rangement pour disques compacts et objets similaires.

(30) Priority: 25.11.1997 ES 9702517
(43) Date of publication of application: 02.06.1999
(73) Proprietor: Lopez Mas, Antonia, 08017 Barcelona (ES)
(72) Inventor: Lopez Mas, Antonia, 08017 Barcelona (ES)
(74) Representative: Renter Llenas, Maria

(56) References cited:
- WO-A-92/22065
- WO-A-92/22066
- DE-A- 3 414 903
- GB-A- 2 261 210
- US-A- 5 450 951

## Description

This invention refers to a case for containing compact discs and similar objects which has novelty and inventive step characteristics as compared to previously known cases for the same purpose.

The case for compact discs according to this invention is aimed at containing compact discs and similar objects being comprised of two substantially square shaped parts respectively forming the container portion and the cover of the case which are articulated to each other, the case internally comprising a support for the discs, which adopts the form of a plate also of square structure, articulated to the assembly constituted by the container portion and the cover of the case, permitting the swiveling of the two parts to allow the handling of the disc or discs to be located into or removed from the case.

WO92/22065 discloses a container (CD box) for compact disc, having a button and a lid mutually jointed by pivot pins and having a plate provided on one or both sides with locking means for holding one compact disc each being arranged between the button and the lid of the box.

Although presently known cases for the same purpose, particularly those of the type in which the plate supporting the discs is articulated in the same edge of the case having the articulation of the container portion and the cover of the case, permit the storage of the compact disc(s) inside the case in a reduced space allowing its opening and closing as desired, it has been observed that during the process of assembly and packaging of said cases some problems arise in the handling of the parts forming the case, specially due to the need that the length of the plate supporting the discs completely coincides with the corresponding dimension of the case, with the aim that the machines filling the cases with the compact discs may simultaneously handle cases both of the type in which the articulation of the supporting plate is located at the edge of articulation of the container portion and the cover of the case and also of the type in which the articulation lies in the opposed edge of the case. For this reason the object of the present invention is to provide a case to permit that the plate supporting the discs, which has a form generally coinciding with the internal part of the container portion of the case, and which length coincides with that of standard cases for compact discs, simultaneously permits the correct articulation in the same edge used for the articulation of the container portion and the cover of the case, thus making possible the automated filling of the cases which contain the discs, permitting to operate with any of the supporting plates for the discs which are known in the market.

To obtain the above defined purposes the case of the present invention is so formed that the container portion has recesses to receive the articulation stubs of the disc supporting plate, located in its internal side faces, extending to a part of its thickness and being located in the vicinity of the edge in which the container portion of the case is articulated to the cover of the same, the disc supporting plate being so form that in the area which is close to the articulation shows an ample rim or flange overhanging the rear border of the container portion of the case which has a somewhat lower height, for which reason when the disc supporting plate rotates on said stubs which are integral with corresponding arms which have a certain flexibility, said rim which preferably has a chamfered border and a curved portion in the vicinity of said border, with the same turning center that said stubs, will be able to rotate above the corresponding border of the container portion of the case which will preferably have a curved portion with the same center that the turning center of said stubs. Thus, the disc supporting plate will be able to rotate above the rim of the container portion of the case, reaching a position in which its chamfered edge will abutt on the external face of the corresponding side of the container portion of the case, permitting a rotation of about 120°, thus allowing a correct handling of the disc by the user. The rotation of the cover of the case in relation to the container portion of the same does not suffer any changes as it will be carried out as usual.

The invention will be further explained in the following according to the drawings of a preferred embodiment of the same. In the drawings:

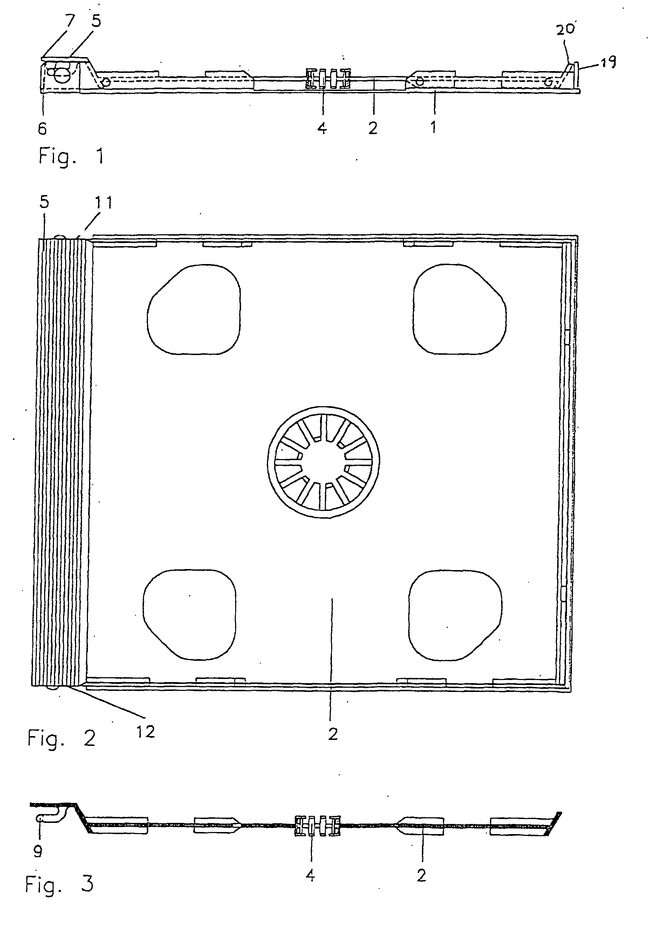

Figure 1 shows a side view of the assembly formed by the container portion of the case and the internal plate to support the discs.

Figure 2 shows a top view of the same assembly of figure 1.

Figure 3 shows a cross section of the plate supporting the discs.

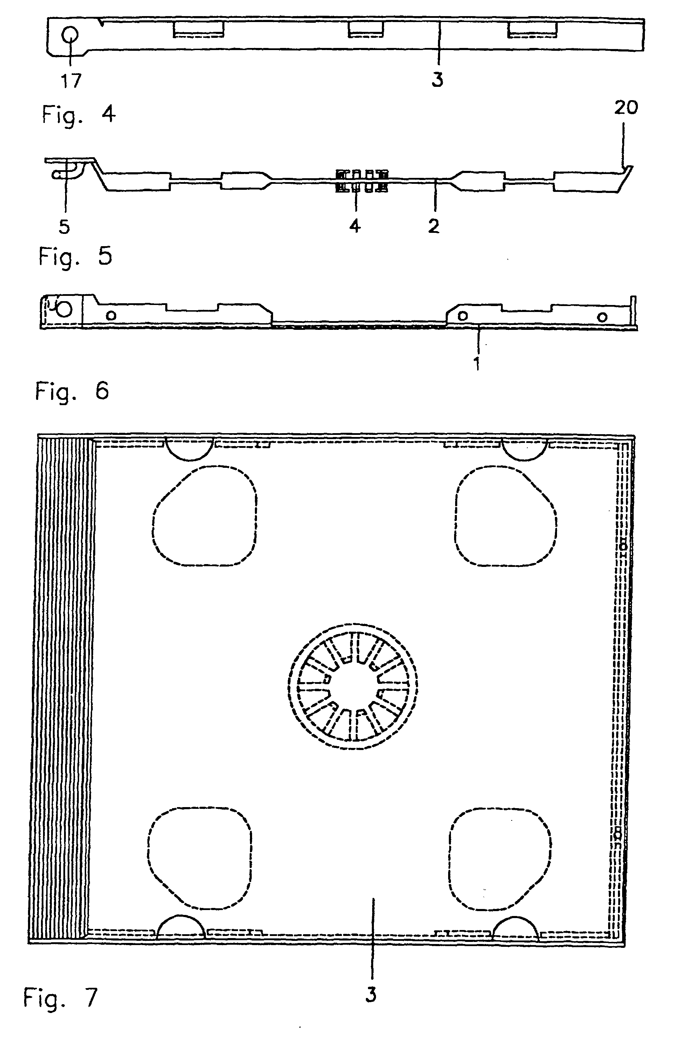

Figure 4 shows a side view of the cover of the case.

Figure 5 shows a side view of the plate supporting the discs.

Figure 6 shows a side view of the container portion of the case.

Figure 7 is a top view of the assembled case after closing.

Figure 8 shows a cross section in detail of the container portion and the disc supporting plate of the case.

Figure 9 shows a detail of the articulation of the plate supporting the discs on the container portion of the case.

Figures 10, 11 and 12 show respective sections in detail corresponding to different turning positions of the elements forming the case.

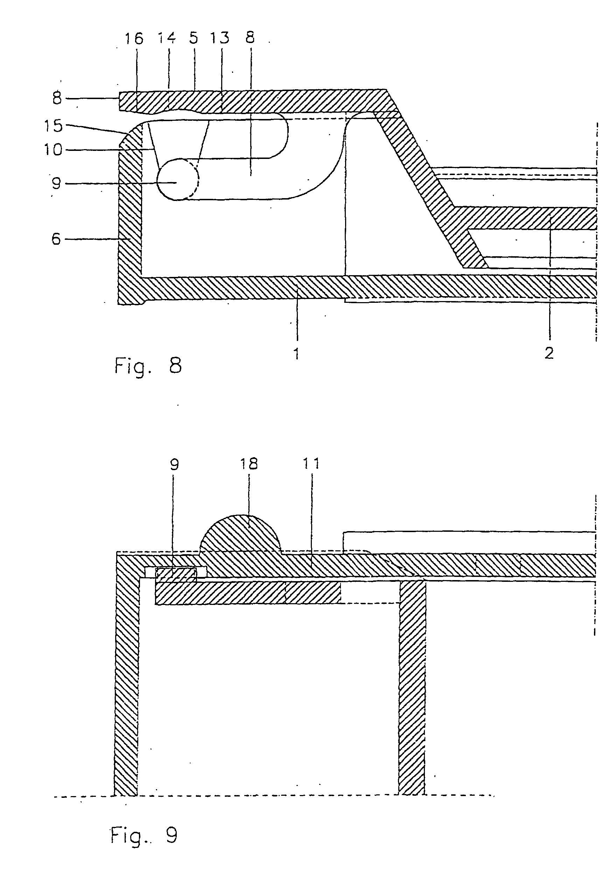

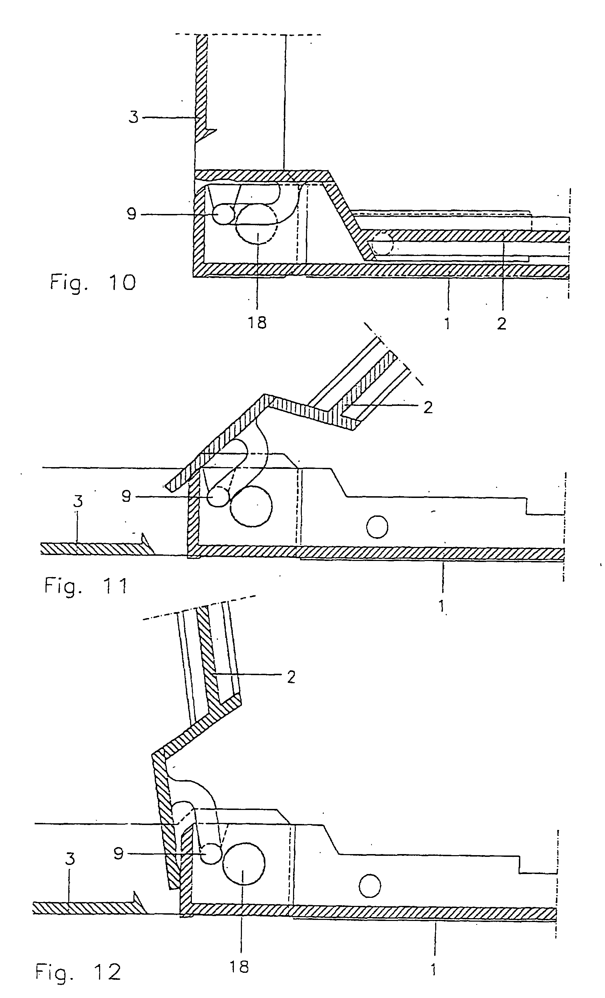

According to the drawings the container portion -1- of the case receives in its internal part the disc supporting plate -2- articulated in the vicinity of the edge receiving the articulation of the cover of the case which has been allotted reference numeral -3- in figure 10 and subsequent. As usual the disc supporting plate -2- has a double central protrusion -4- for receiving a compact disc in each of its two faces. According to the invention the disc supporting plate -2- has in its articulation edge an elevated rim -5- which overlapps on the border of the rear wall -6- of the container portion -1-, thus permitting to fulfill the desired purpose that the length of the disc supporting plate -2- comprised between the front edge -20- and the rear edge -7- coincides with the internal length of the container portion -1-, thus having the same length than any standard disc supporting plate conventionally known in the market, specially in those supporting plates in which the articulation of the disc supporting plate on the container portion of the case is carried out on the end border -19- close to the rim -20- of said disc supporting plate. To maintain the overall height of the assembly formed by the container portion -1- and the disc supporting plate -2-, taking into account the position of the flange -5- overlapping the rear wall -6-, it will be necessary that the height of this latter be somewhat lower, to compensate the excess of height brought about by the elevated flange -5-. As may be observed in more detail in figures 8 and 9, the flange -5- has on each side a curved leg -8-, one of which has been shown in figure 8, starting from the internal face of the elevated flange -5-. Said legs have in its respective ends the protruding pins -9- which penetrate into the grooves -10-, which extend to a part of the thickness of the side wall -11- of container portion -1- of the case. While only one of the assemblies formed by one leg -8-, the stop -9-and its receiving groove -10- has been shown in the drawings, it will be understood that there will be one of such assemblies at each end of the elevated flange -5-, that is, corresponding respectively to the ends -12- and -12'- of said flange -5-.

The explained arrangement will facilitate the assembly of the disc supporting plate -2- on the grooves -10- of the container portion -1- as it will be possible to make such assembly just by a vertical descent of the supporting plate on the container portion of the case. This will make the automatic assembly easier. Further it will be obtained that the overall length of the disc supporting plate coincides with the length corresponding to standard disc supporting plates. At the same time, to permit the easier turning of the disc supporting plate -2- around the geometrical axis determined by pins -9-, the internal face -13- of the elevated flange -5- will have a recess in form of a circular sector -14- which center will coincide with the geometrical axis of the pins -9- to improve the rotation without interference of cover -2-, specially in respect of the rear border -15- of the wall -6- which will be also curved, to permit the free rotation with a minimum gap between the disc supporting plate and the corresponding part of container portion -1- as to be seen in figure 11. The abutment position of the disc supporting plate -2- will be determined by the contact of the chamfer -16- of the border -7- of the elevated flange -5- with the rear face -6- of the container portion of the case.

By means of this arrangement both the automatic assembly of the disc on the disc supporting plate as well as the assembly of said disc supporting plate on the container portion of the case will be made easier. The case will be subsequently closed by means of the cover -3- which will be associated by means of the holes -17- to the protruding elements -18- of the side walls of the case, figure 9.

Although the invention has been described in relation with a preferred embodiment of same it will be understood that variations will be possible to be introduced in the same without departing from the scope of the invention as defined in the appended claims.

## Claims

1. Case for compact discs and similar objects, of the type which comprises a container portion (1) and a cover portion (3) mutually articulated and a disc supporting plate (2) articulated in the container portion (1) of the case in the same edge in which the cover portion (3) is articulated; in which the disc supporting plate (2) is rotable on journals located in the vicinity of the rear edge of the container portion (1) and formed with a raised flange (5) which overlaps the upper border of the rear wall (6) of the container portion (1) of the case, its length corresponding to the total length comprised between the internal face (13) of the front wall of the container portion (1) of the case and the rear face (15) of the rear wall (6) of the same container portion,
**characterized in that** pivoting pins (9) of the disc supporting plate (2) are formed in corresponding flexible protruding arms (8) which extend from the lower face (13) of the raised flange (5) of the disc supporting plate (2), said pins (9) being capable of entering respective grooves (10) of the internal faces of the said walls (11) of the container portion (1) of the case after the pin bearing flexible arms (8) have been transversally deformed.

2. Case for compact discs and similar objects according to claim 1, **characterized in that** the raised flange (5) of the disc supporting plate (2) has in its lower face a curved recess (14) with a center of curvature coinciding with the pivoting axis (9) of the disc supporting plate (2) to permit the rotation of said disc supporting plate without interference with the edge (15) of the rear wall of the container portion (1).

3. Case for compact discs and similar objects according to claims 1 or 2, **characterized in that** the rear edge (15) of the container portion (1) of the case is curved with a center of curvature coinciding with the pivoting axis of the disc supporting plate (2).

4. Case for compact discs and similar objects according to claim 1, **characterized in that** the raised flange (5) of the disc supporting plate (2) has its rear edge chamfered (16) for abutting at the end of its rotation on the rear face of the rear wall (6) of the container portion (1) of the case, limiting the rotation of said disc supporting plate (2).

## Patentansprüche

1. Leerbox für Compact-Disks und dergleichen, bestehend aus einem Unterteil (1) und einem Oberteil (3), die gelenkig miteinander verbunden sind, sowie einer CD-Halteplatte (2), die am gleichen Rand wie das Oberteil (3) mit dem Unterteil (1) gelenkig verbunden ist, wobei die CD-Halteplatte (2) über nahe der rückwärtigen Kante des Unterteils (1) gelegene Drehpunkte schwenkbar und mit einem sich über die ganze Breite der Platte erstreckenden, die Oberkante der Rückwand (6) des Leerbox-Unterteils (1) überlappenden überhöhten Falz (5) versehen ist, dessen Gesamtlänge der Länge zwischen der Innenseite (13) der vorderen Wand des Unterteils (1) und der Außenseite (15) der Rückwand (6) desselben Unterteils entspricht, **dadurch gekennzeichnet, dass** die Drehzapfen (9) der CD-Halteplatte (2) in jeweils eine von der Innenseite (13) des rückwärtigen überhöhten Falzes (5) der CD-Halteplatte (2) ausgehende biegsame Pratze (8) integriert sind und nach ihrer elastischen Querverformung die Drehzapfen (9) in jeweils eine an der Innenseite der Seitenwände (11) des Leerbox-Unterteils (1) vorgesehene Nut (10) eingesetzt werden können, nach der biegung in quer richtung der zapfen der trägt die biegsame Pratzen (8).

2. Leerbox für CDs und dergleichen nach Anspruch 1, **dadurch gekennzeichnet, dass** der rückwärtige überhöhte Falz (5) der Halteplatte (2) auf seiner Unterseite einen kreisbogenförmigen Absatz (14) aufweist, dessen Krümmungsmittelpunkt im Bereich der Schwenkachse (9) der CD-Halteplatte (2) liegt, damit diese problemlos geschwenkt werden kann, ohne sich an der Kante (15) der Rückwand des Unterteils (1) zu stoßen.

3. Leerbox für CDs und dergleichen nach Anspruch 1 oder 2, **dadurch gekennzeichnet, dass** die rückwärtige Kante (15) des Unterteils (1) gekrümmt ist und einen mit der Schwenkachse der CD-Halteplatte (2) übereinstimmenden Krümmungsradius aufweist.

4. Leerbox für CDs und dergleichen nach Anspruch 1, **dadurch gekennzeichnet, dass** der überhöhte Falz (5) der Halteplatte (2) an seinem rückwärtigen Rand eine Schrägung (16) aufweist, die beim Drehen der Halteplatte (2) mit der Rückseite der Rückwand (6) des Leerbox-Unterteils (1) zusammentreffen soll, um die Drehung zu begrenzen.

## Revendications

1. Boîtier à disques compacts et similaires, du type comprenant un élément de caisse (1) et un élément de couvercle (3) articulés entre eux ainsi qu'une plaque porte-disque (2) articulée dans la caisse (1) dans l'arête de celle-ci, là où s'articule le couvercle (3), où la plaque qui porte le disque (2) tourne sur des points de rotation se trouvant près de l'arête postérieure de la caisse (1), et est munie d'un rebord (5)qui s'étend sur toute la largeur de la plaque et recouvre le bord supérieur de la paroi supérieure (6) de la caisse (1) du boîtier, sa longueur totale correspondant à la longueur comprise entre la face interne (13) de la paroi antérieure de la caisse du boîtier (1) et la face postérieure (6) de la paroi postérieure (15) de la propre caisse du boîtier, **caractérisé par** les pivots de rotation (9) de la plaque porte-disque (2) qui sont incorporés aux deux pattes flexibles (8) qui se prolongent de la face inférieure (13) du rebord postérieur (5)de la plaque porte-disque (2), ces pivots (9) étant susceptibles de s'introduire après leur déformation transversale élastique dans les rainures (10) des faces internes des parois latérales (11) de la caisse (1) du boîtier, après que le pivot qui porte les pattes élastiques (8) ait été déformé transversalement.

2. Boîtier à disques compacts et similaires, suivant la revendication 1, **caractérisé par** le rebord postérieur (5) de la plaque porte-disque (2) qui est muni, sur sa face inférieure, d'une feuillure (14) en forme d'arc de cercle dont le centre de courbure se trouve dans l'axe de pivotement (9) de la plaque porte-disque (2), afin de permettre la rotation sans interférence avec le bord (15) de la paroi postérieure de cet élément de caisse (1).

3. Boîtier à disques compacts et similaires, suivant la revendication 1 ou 2, **caractérisé par** le bord postérieur (15) de la caisse (1) du boîtier qui est courbe avec un rayon de courbure coïncidant avec l'axe de basculement de la plaque porte-disque (2).

4. Boîtier à disques compacts et similaires, suivant la revendication 1, **caractérisé par** le rebord (5) de la plaque porte-disque (2) qui présente, sur le bord postérieur, un pan coupé (16) destiné à coïncider, au moment de tourner, avec la face postérieure de la paroi arrière (6) de la caisse (1) du boîtier, en limitant la rotation de cette plaque porte-disque (2).
